# DEMANDE DE BREVET EUROPEEN

(11) **EP 1 528 331 A1**
(43) Date de publication de la demande: **04.05.2005**
(21) Numéro de dépôt: 04292564.4
(22) Date de dépôt: 28.10.2004
(51) Int. Cl.: F24D 3/12

(54) **Procédé et installation de chauffage par surface rayonnante pour un local subdivisé en plusieurs pièces, et module de gestion hydraulique pour une telle installation**

(30) Priorité: 30.10.2003 FR 0312731
(71) Demandeur: Acome Société Cooperative De Production, Société Anonyme, A Capital Variable, 75008 Paris (FR)
(72) Inventeur: Tansorier, Laurent, 50140 Mortain (FR); Da Rocha, Jean-Claude, 61100 Flers (FR); Fillatre, Daniel, 50140 Romagny (FR)
(74) Mandataire: Gorree, Jean-Michel

(57) **Abrégé**

Procédé pour chauffer un local (1) subdivisé en plusieurs pièces (2a, 2b, 2c) à partir d'un circuit hydraulique primaire à haute température (Hp), au moins une pièce étant équipée d'au moins un circuit hydraulique secondaire à basse température (Hs) de chauffage par surface rayonnante,
caractérisé en ce qu'on gère (8) individuellement le fonctionnement de chaque circuit hydraulique secondaire à basse température (Hs) avec un apport compensateur de fluide hydraulique à haute température du circuit hydraulique primaire.

## Description

La présente invention concerne des perfectionnements apportés dans le domaine du chauffage, par surface rayonnante, et notamment par plancher chauffant, de locaux subdivisés en plusieurs pièces, et plus précisément du chauffage de tels locaux à partir d'un circuit hydraulique primaire à haute température, tandis qu'au moins une pièce est équipée d'au moins un circuit hydraulique secondaire à basse température pour la surface rayonnante.

Les dispositions conformes à l'invention peuvent trouver une application particulièrement intéressante, bien que non exclusive, pour la rénovation de locaux, préalablement équipés d'une installation de chauffage central par radiateurs, que l'on souhaite pourvoir de planchers chauffants. De plus, dans les explications qui suivent, il est essentiellement fait mention de chauffage par plancher chauffant car il s'agit là de l'application la plus courante en pratique ; toutefois il reste entendu que les dispositions de l'invention resteraient exploitables dans le cas où le chauffage s'effectuerait en totalité ou en partie par des surfaces rayonnantes d'autres types (notamment mur ou plafond).

On connaît divers systèmes de chauffage par circulation d'un fluide hydraulique caloporteur (notamment de l'eau) aux fins de chauffage de locaux.

Le système de chauffage hydraulique qui a été longtemps le plus répandu est un système de chauffage centralisé ("chauffage central") par radiateurs, qui est équipé d'une source de chaleur (chaudière au fioul, au gaz ou électrique) qui fournit à la fois l'eau chaude sanitaire et l'eau chaude de chauffage alimentant les radiateurs. La température de l'eau est élevée, typiquement de 60°C à 90°C. Les systèmes de chauffage centralisé par radiateurs présentent divers inconvénients :
- gradient thermique dans la pièce à chauffer, autour du point chaud, pouvant entraîner un inconfort,
- encombrement mural dû au montage des radiateurs sur les murs,
- salissures des murs et des plafonds au-dessus des radiateurs,
- brassage des poussières par les mouvements convectifs de l'air dans la pièce à chauffer.

Un autre système de chauffage aujourd'hui largement développé est le chauffage par le sol à basse température (température de départ de 50°C au maximum). La source de chaleur peut être une chaudière du type précédemment mentionné (il est alors nécessaire d'effectuer une réduction de température entre la sortie de la chaudière et la partie chauffage), ou bien on peut faire appel à des techniques mixtes comme les pompes à chaleur, les capteurs solaires, ..., dont le fonctionnement est particulièrement adapté pour la production de fluide chauffé à une température n'excédant pas 50°C. Les systèmes de chauffage par le sol pallient la plupart des inconvénients présentés par les systèmes de chauffage par radiateurs muraux : production de chaleur constante et douce sur une grande surface, sans bruit de canalisation dans les circuits hydrauliques, sans mouvements convectifs de l'air et sans encombrement mural. Cependant, ces installations demeurent complexes, car elles nécessitent :
- l'équilibrage des différents circuits qui demande des connaissances particulières et la réalisation de calculs afin que chaque circuit puisse atteindre le meilleur rendement thermique/hydraulique sans être perturbé par le (s) circuit (s) voisin (s) (en pratique on estime à seulement 30 % les installations de chauffage par le sol bien équilibrées),
- la mise en place d'une régulation centralisée (vanne 3 ou 4 voies + circulateur + bouteille de mélange) qui représente un coût assez élevé et doit être réglée conformément aux besoins du bâti.

Quelle que soit l'organisation des tubes chauffants, les systèmes de chauffage par le sol sont des systèmes qui présentent une forte inertie thermique du fait de l'insertion des nappes de tubes hydrauliques, plaqués sur un support isolant, dans une chape épaisse en béton et qui sont alimentés de façon centralisée (l'inertie d'un plancher chauffant traditionnel avec dalle en béton est très importante, typiquement de l'ordre de 5 à 8 heures).

Le document FR 2 739 177 présente (figure 1 de ce document) une telle installation de chauffage à planchers chauffants alimentée à partir d'une chaudière classique, celle-ci alimentant les divers circuits hydrauliques des planchers chauffants avec interposition, entre le circuit à haute température connecté à la chaudière et les circuits à basse température des planchers chauffants, d'une bouteille de mélange (ou bouteille d'homogénéisation) formant volume tampon et d'un circulateur ; un conduit de bipasse est disposé en parallèle sur la bouteille de mélange du côté basse température et une vanne 3 voies règle le mélange.

Cette installation connue, dans laquelle il est prévu une gestion unique pour l'ensemble des planchers chauffants, présente les inconvénients exposés plus haut, notamment : nécessité d'équilibrage des circuits hydrauliques des planchers chauffants, coût des matériels dimensionnés pour la circulation de la totalité du liquide de chauffage (la bouteille de mélange en particulier est très volumineuse).

L'invention a pour but de proposer une solution technique originale permettant de mettre en oeuvre un chauffage par planchers (donc à basse température) à partir d'une chaudière classique à haute température tout en écartant les inconvénients indiqués précédemment, une telle solution pouvant trouver son intérêt notamment pour la rénovation de locaux déjà équipés d'une chaudière classique à haute température antérieurement associée à un système de chauffage par radiateurs.

A ces fins, selon un premier aspect de l'invention, il est proposé un procédé pour chauffer un local subdivisé en plusieurs pièces à partir d'un circuit hydraulique primaire à haute température, au moins une pièce étant équipée d'au moins un circuit hydraulique secondaire à basse température de chauffage par surface rayonnante, lequel procédé se caractérise, conformément à l'invention, en ce qu'on raccorde chaque circuit hydraulique secondaire à basse température au circuit hydraulique primaire à haute température et en ce qu'on gère individuellement le fonctionnement de chaque circuit hydraulique secondaire à basse température avec recirculation au moins partielle du fluide hydraulique à basse température du circuit hydraulique secondaire et avec un apport compensateur de fluide hydraulique à haute température du circuit hydraulique primaire. Avantageusement, lorsqu'une pièce est équipée de plusieurs circuits hydrauliques secondaires à basse température de chauffage par plancher chauffant, on gère individuellement le fonctionnement de chaque circuit hydraulique secondaire équipant cette pièce.

Grâce aux dispositions de l'invention, on est ainsi amené à rendre fonctionnellement indépendants les divers circuits de surfaces rayonnantes, ce qui écarte toute nécessité d'équilibrage entre les circuits qui constitue un point très délicat pour un fonctionnement correct des installations antérieures. Il n'est désormais besoin que de prévoir, pour chaque circuit de surface rayonnante, une simple interface entre le circuit hydraulique primaire à haute température (typiquement eau chaude 90°C, pression 4 x 10⁵ Pa) alimenté par la chaudière et le circuit hydraulique secondaire à basse température (typiquement 50°C, pression 6 x 10⁵ Pa) de la surface rayonnante.

Du fait que cette interface n'a à gérer qu'un unique circuit secondaire, elle peut être réalisée sous une forme compacte et peu encombrante.

Selon un deuxième aspect de l'invention, il est proposé une installation de chauffage par surface rayonnante pour un local comportant plusieurs pièces, ladite installation comportant un circuit hydraulique primaire à haute température et, dans au moins une pièce, au moins un circuit hydraulique secondaire de chauffage à basse température pour la surface rayonnante, laquelle installation, étant agencée conformément à l'invention, se caractérise en ce que chaque circuit hydraulique secondaire à basse température est connecté au circuit hydraulique primaire à haute température et en ce qu'un dispositif de gestion individuelle est interposé entre ledit circuit hydraulique primaire à haute température et chaque circuit hydraulique secondaire à basse température, ledit dispositif étant propre à réguler, équilibrer et régler ledit circuit hydraulique secondaire par recirculation au moins partielle du fluide hydraulique de celui-ci avec apport compensateur de fluide hydraulique à haute température du circuit hydraulique primaire.

Avantageusement, lorsqu'une pièce est équipée de plusieurs circuits hydrauliques secondaires de chauffage à basse température, à chaque circuit hydraulique secondaire est fonctionnellement associé un dispositif de gestion individuelle respectif.

Dans un mode de réalisation concret, le dispositif de gestion comprend :
- une bouteille de mélange,
- deux conduits respectivement d'amenée et de retour de fluide hydraulique primaire à haute température raccordés entre ledit circuit hydraulique primaire et ladite bouteille de mélange pour l'alimentation de celle-ci en fluide hydraulique primaire à haute température,
- deux conduits respectivement de départ et de retour du fluide hydraulique secondaire à basse température raccordés, à une de leurs extrémités respectives, audit circuit hydraulique secondaire,
- un conduit de bipasse s'étendant entre les autres extrémités respectives desdits conduits de départ et de retour de fluide hydraulique secondaire,
- un conduit d'interconnexion d'amenée entre la bouteille de mélange et la jonction du conduit de bipasse avec le conduit de départ du fluide hydraulique secondaire pour y amener du fluide hydraulique primaire à haute température en provenance de la bouteille de mélange,
- un conduit d'interconnexion de retour entre la jonction du conduit de bipasse avec le conduit de retour du fluide hydraulique secondaire et la bouteille de mélange pour ramener à celle-ci du fluide hydraulique secondaire de retour, et
- des moyens de circulation du fluide hydraulique secondaire disposés dans le susdit conduit de départ du fluide hydraulique secondaire.

Par bouteille de mélange, dite aussi bouteille d'homogénéisation, on entend désigner un volume tampon interposé entre les circuits hydrauliques primaire et secondaire qui sont sous des pressions respectives différentes. Par contre, on notera que le mélange d'un apport compensateur de fluide hydraulique primaire à haute température dans le fluide hydraulique secondaire de retour recyclé à travers le conduit de bipasse se réalise à la jonction du conduit d'interconnexion d'amenée, du conduit de bipasse et du conduit de départ de fluide hydraulique secondaire, laquelle jonction constitue à proprement parler une chambre de mélange hydraulique permettant de porter le fluide hydraulique secondaire de départ à la température souhaitée.

De préférence, chaque dispositif comprend en outre un capteur de température disposé dans la pièce et les moyens de circulation du fluide hydraulique secondaire sont placés sous la dépendance dudit capteur de température ; avantageusement alors, chaque dispositif comprend en outre des moyens de réglage de seuil de température placés sous la dépendance dudit capteur de température et les moyens de circulation du fluide hydraulique secondaire sont placés sous la dépendance desdits moyens de réglage de seuil de température. Dans un tel agencement, lorsqu'une pièce est équipée de plusieurs circuits hydrauliques secondaires à basse température, il est prévu un seul capteur de température et tous les dispositifs de gestion individuelle respectifs des circuits hydrauliques secondaires de cette pièce sont placés sous la dépendance de cet unique capteur de température, ou bien en variante il est prévu, dans cette pièce, plusieurs capteurs de température associés fonctionnellement respectivement aux dispositifs de gestion individuelle respectifs des circuits hydrauliques secondaires de cette pièce.

Compte tenu des faibles échanges hydrauliques et thermiques à assurer entre le circuit hydraulique primaire et le circuit hydraulique secondaire, le dispositif de gestion individuelle peut être conçu sous un faible encombrement et, dans un mode de réalisation préféré, ce dispositif est en partie agencé sous forme d'un module comprenant un bloc dans lequel sont prévus :
- une cavité formant bouteille de mélange miniature,
- deux conduits respectivement d'amenée et de retour interposés entre une face dudit bloc et la cavité, pour l'alimentation de la cavité en fluide hydraulique primaire à haute température,
- deux canaux respectivement de départ et de retour de fluide hydraulique secondaire à basse température débouchant, à une de leurs extrémités respectives, sur une face dudit bloc,
- un canal de bipasse s'étendant entre les autres extrémités respectives desdits canaux de départ et de retour de fluide hydraulique secondaire,
- un canal d'interconnexion d'amenée s'étendant entre ladite cavité et la jonction du canal de bipasse avec le canal de départ de fluide hydraulique secondaire, la jonction entre ledit canal de départ de fluide hydraulique secondaire, ledit canal d'interconnexion d'amenée et ledit canal de bipasse formant chambre de mélange, et
- un canal d'interconnexion de retour s'étendant entre la jonction du canal de bipasse avec le canal de retour de fluide hydraulique secondaire et ladite cavité.

Dans ce cas, pour faciliter les raccordements avec le circuit hydraulique primaire et/ou le circuit hydraulique secondaire, on prévoit avantageusement que les deux susdits conduits débouchent sur une même face du bloc et/ou respectivement que les deux canaux de départ et de retour débouchent sur une même face du bloc.

Toujours dans l'optique de réaliser un dispositif aussi compact que possible, on peut faire en sorte que le bloc comporte en outre un évidement creusé dans une face dudit bloc et traversé par le canal de départ en aval de ladite chambre de mélange, ce grâce à quoi un dispositif de pompage peut être monté sur le module avec un organe de pompage engagé dans ledit évidement pour la circulation du fluide hydraulique dans le circuit secondaire, et il est alors avantageux que le dispositif de pompage soit fixé sur la face dudit bloc pourvue dudit évidement et que ladite face du bloc et le dispositif de pompage soient mutuellement agencés pour que le dispositif de pompage obture ledit évidement de façon étanche.

Grâce aux dispositions conformes à l'invention, on est en mesure de réaliser une installation simple, mais fiable, avec, pour chaque pièce ou pour chaque circuit hydraulique secondaire, une interface entre circuits haute et basse température réalisable sous forme d'un module de petites dimensions propre à être fixé discrètement sur un mur, voire à être intégré dans un mur.

Enfin, selon un troisième de ses aspects, il est proposé un module de gestion hydraulique pour une installation hydraulique de chauffage comportant un circuit secondaire à basse température, notamment pour un plancher chauffant, alimenté à partir d'un circuit primaire à haute température telle qu'exposée ci-dessus, lequel module, étant agencé conformément à l'invention, se caractérise en ce qu'il comprend un bloc dans lequel sont prévus :
- une cavité formant bouteille de mélange miniature,
- deux conduits respectivement d'amenée et de retour interposés entre une face dudit bloc et la cavité, pour l'alimentation de la cavité en fluide hydraulique primaire à haute température,
- deux canaux respectivement de départ et de retour de fluide hydraulique secondaire à basse température débouchant, à une de leurs extrémités respectives, sur une face dudit bloc,
- un canal de bipasse s'étendant entre les autres extrémités respectives desdits canaux de départ et de retour de fluide hydraulique secondaire,
- un canal d'interconnexion d'amenée s'étendant entre ladite cavité et la jonction du canal de bipasse avec le canal de départ de fluide hydraulique secondaire, la jonction entre ledit canal de départ de fluide hydraulique secondaire, ledit canal d'interconnexion d'amenée et ledit canal de bipasse formant chambre de mélange, et
- un canal d'interconnexion de retour s'étendant entre la jonction du canal de bipasse avec le canal de retour de fluide hydraulique secondaire et ladite cavité.

Pour faciliter son raccordement au circuit haute température et/ou au circuit basse température, il est intéressant que les deux susdits conduits débouchent sur une même face du bloc et/ou que les deux canaux de départ et de retour de fluide hydraulique secondaire débouchent sur une même face du bloc.

De façon préférée, le bloc comporte en outre un évidement creusé dans une face dudit bloc et traversé par le canal de départ en aval de ladite chambre de mélange, ce grâce à quoi un dispositif de pompage peut être monté sur le module avec un organe de pompage engagé dans ledit évidement pour la circulation du fluide hydraulique dans le circuit secondaire. Dans ce cas, un module ainsi agencé se caractérise avantageusement en ce que le dispositif de pompage est fixé sur la face dudit bloc pourvue dudit évidement et en ce que ladite face du bloc et le dispositif de pompage sont mutuellement agencés pour que le dispositif de pompage obture ledit évidement de façon étanche.

L'invention sera mieux comprise à la lecture de la description détaillée qui suit de certains modes de réalisation préférés donnés uniquement à titre d'exemples purement illustratifs. Dans cette description, on se réfère aux dessins annexés sur lesquels :
- la figure 1 est une vue schématique d'un local aménagé avec une installation de chauffage conforme à l'invention ;
- la figure 2 est une vue schématique d'une interface entre circuits haute et basse température mise en oeuvre dans l'installation de la figure 1 ; et
- la figure 3 est une vue en coupe d'un module monobloc propre à assurer la fonction d'interface illustrée à la figure 2.

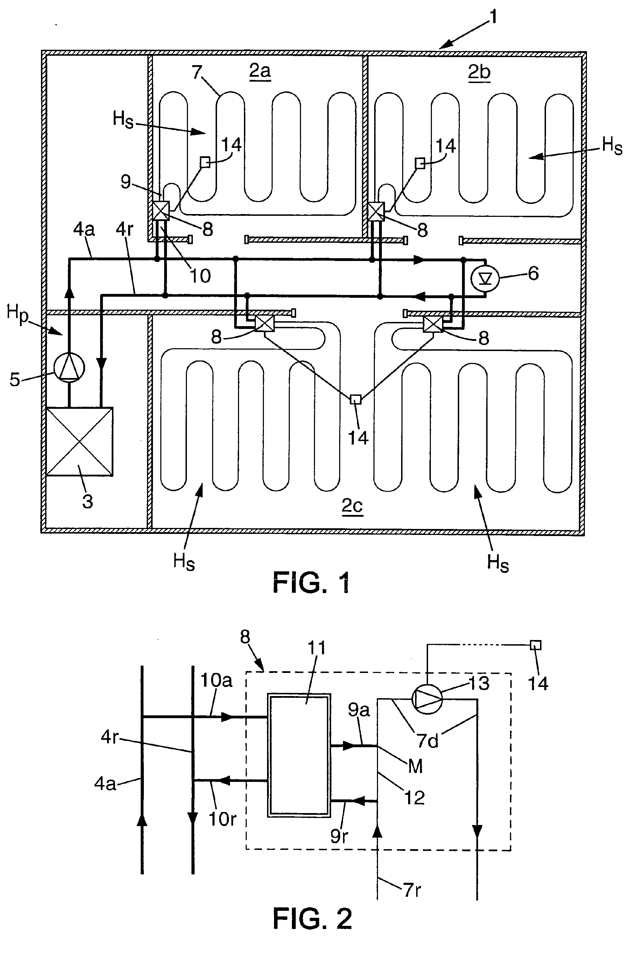

A la figure 1, à laquelle on se réfère tout d'abord, est représenté schématiquement un local 1 subdivisé intérieurement en plusieurs pièces parmi lesquelles trois pièces 2a, 2b et 2c doivent être chauffées par un système de chauffage. Dans le cadre d'une application préférée de l'invention, le local 1 est un local d'habitation (maison individuelle, appartement) qui est rénové, et dont notamment le système de chauffage est modifié. Du système de chauffage par radiateurs qui existait antérieurement, on conserve la chaudière 3, les tuyauteries d'amenée et de retour d'eau respectivement 4a et 4r, ainsi que la pompe de circulation 5 et la vanne anti-retour 6 entre les tuyauteries d'amenée et de retour. Tous ces éléments constituent un circuit hydraulique primaire, désigné dans son ensemble par Hp, propre à générer et à transporter à travers le local (et éventuellement à alimenter des radiateurs situés ailleurs) un fluide hydraulique caloporteur (en général de l'eau) à haute température (typiquement 60°C à 90°C sous une pression de l'ordre de 4 x 10⁵ Pa).

Pour assurer le chauffage des pièces 2a à 2c, il est prévu, dans le cadre de la rénovation, de remplacer les radiateurs antérieurs, directement alimentés par les tuyauteries 4a, 4r, par des surfaces rayonnantes, notamment par des planchers chauffants, c'est-à-dire des circuits hydrauliques secondaires qui utilisent une circulation de fluide hydraulique caloporteur (typiquement de l'eau) à basse température (typiquement 50°C au maximum sous une pression de l'ordre de 6 x 10⁵ Pa) et qui sont alimentés à partir du circuit primaire Hp.

Chaque pièce est équipée d'au moins un circuit hydraulique secondaire, désigné par Hs, qui est connecté au circuit hydraulique primaire Hp et, conformément à l'invention, on gère individuellement le fonctionnement de chaque circuit hydraulique secondaire Hs avec un apport compensateur de fluide hydraulique à haute température du circuit primaire Hp.

Dans l'exemple illustré à la figure 1, les pièces 2a et 2b sont supposées être de dimensions ne nécessitant chacune qu'un seul circuit hydraulique secondaire Hs. La pièce 2c est supposée de plus grandes dimensions et nécessite, pour son chauffage correct, plusieurs (en l'occurrence deux) circuits hydrauliques secondaires Hs qui sont constitués indépendamment l'un de l'autre et qui sont gérés individuellement.

Chaque circuit hydraulique secondaire Hs comprend un tube 7 équipant le plancher chauffant et disposé selon toute configuration appropriée déterminée par l'homme du métier. Ce tube 7 est raccordé en 9 à un dispositif 8 de gestion individuelle qui se trouve ainsi interposé (interface) entre le circuit hydraulique secondaire à basse température Hs et le circuit hydraulique primaire à haute température Hp auquel il est raccordé en 10. Le dispositif 8 de gestion individuelle est propre à réguler, équilibrer et régler le circuit hydraulique secondaire Hs par recirculation au moins partielle du fluide hydraulique de celui-ci avec apport compensateur de fluide hydraulique à haute température du circuit hydraulique primaire Hp.

Conformément à l'invention, chaque circuit hydraulique secondaire Hs est équipé de son propre dispositif 8 de gestion individuelle raccordé individuellement aux tuyauteries 4a, 4r du circuit hydraulique primaire Hp. En particulier, dans la pièce 2c, les deux circuits secondaires Hs qui l'équipent sont pourvus chacun de leur propre dispositif 8 de gestion individuelle.

Chaque dispositif 8 de gestion individuelle peut être constitué selon une configuration classique avec, comme illustré schématiquement à la figure 2 :
- une bouteille de mélange 11,
- deux conduits 10a et 10r respectivement d'amenée et de retour de fluide hydraulique primaire à haute température raccordés, d'un côté, respectivement aux tuyauteries 4a et 4r du circuit hydraulique primaire Hp et, de l'autre côté, à la bouteille de mélange 11 pour l'alimentation de celle-ci en fluide hydraulique primaire à haute température,
- deux conduits 7d et 7r respectivement de départ et de retour de fluide hydraulique secondaire à basse température raccordés, à une de leurs extrémités respectives, audit circuit hydraulique secondaire Hs,
- un conduit de bipasse 12 établi entre lesdits conduits de départ et de retour, respectivement 7d, 7r, de fluide hydraulique secondaire,
- un conduit de bipasse 12 s'étendant entre les autres extrémités respectives desdits conduits 7d, 7r de départ et de retour de fluide hydraulique secondaire,
- un conduit d'interconnexion 9a d'amenée de fluide hydraulique primaire à haute température raccordé, d'un côté, à la jonction du conduit 7d de départ de fluide hydraulique secondaire avec le conduit de bipasse 12 et, de l'autre côté, à la bouteille de mélange 11,
- un conduit d'interconnexion 9r de retour de fluide hydraulique secondaire à basse température raccordé, d'un côté, à la jonction du conduit 7r de retour de fluide hydraulique secondaire avec le conduit de bipasse 12 et, de l'autre côté, à la bouteille de mélange 11, et
- des moyens 13 de circulation du fluide hydraulique secondaire disposés dans le susdit conduit 7d de départ du fluide hydraulique secondaire.

La jonction entre le conduit 7d de départ de fluide hydraulique secondaire, le conduit de bipasse 12 et le conduit d'interconnexion 9a forme une chambre de mélange M dans laquelle un apport de fluide hydraulique primaire amené par le conduit d'interconnexion 9a vient relever la température du fluide hydraulique secondaire de retour recyclé à travers le conduit de bipasse 12.

Dans un mode de réalisation qui s'avère préféré en pratique, le dispositif 8 de gestion individuelle comprend en outre un capteur de température 14 disposé dans la pièce et les moyens 13 de circulation du fluide hydraulique secondaire sont placés sous la dépendance dudit capteur 14 de manière que soit assurée une gestion appropriée du chauffage de la pièce.

Egalement de préférence en pratique, chaque dispositif 8 de gestion individuelle comprend en outre des moyens de réglage de seuil de température (non représentés) placés sous la dépendance du capteur de température 14 et les moyens 13 de circulation du fluide hydraulique secondaire sont placés sous la dépendance desdits moyens de réglage de seuil de température de manière que le chauffage de la pièce soit adaptable.

Lorsqu'une pièce 2c est équipée de plusieurs circuits hydrauliques secondaires Hs, on peut prévoir de disposer alors dans la pièce plusieurs capteurs de température 14 de telle manière que chaque dispositif 8 de gestion individuelle de chaque circuit secondaire Hs soit placé sous la dépendance de son propre capteur de température. Il en résulte une plus grande souplesse de réglage du chauffage dans les diverses parties de la pièce, ce qui peut être utile notamment dans le cas où de forts contrastes thermiques existent entre ces diverses parties. Mais il est également possible, comme illustré à la figure 1, de simplifier l'agencement (et de réduire son coût) en ne prévoyant qu'un seul capteur de température 14 sous la dépendance duquel sont placés les dispositifs 8 de gestion individuelle des divers circuits secondaires Hs.

L'intérêt important de la gestion individuelle de chaque circuit hydraulique secondaire Hs à partir du circuit hydraulique primaire Hp unique réside dans la suppression de l'équilibrage - opération complexe et délicate - nécessité par les installations antérieures.

Un autre avantage réside dans une gestion plus fine et mieux adaptée de la fourniture de chaleur en fonction des besoins spécifiques de chaque circuit secondaire, sans répercussion sur les autres circuits secondaires et avec une plus grande rapidité de réponse.

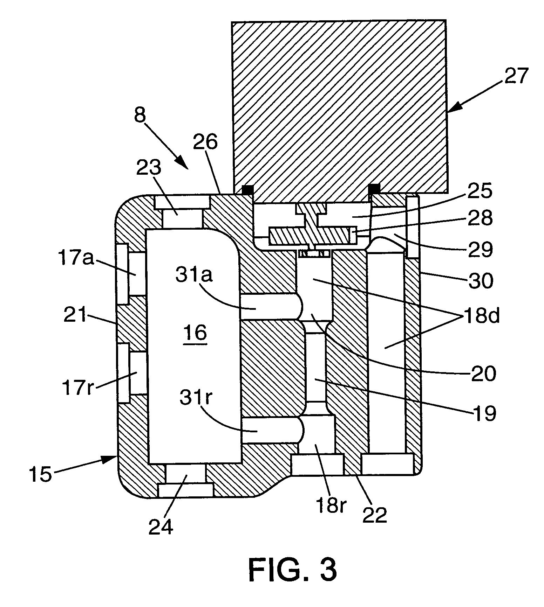

Enfin, eu égard aux besoins de chaque circuit secondaire, chaque dispositif 8 de gestion individuelle peut, tout en conservant le schéma classique exposé ci-dessus, être réalisé sous forme compacte. En particulier, la bouteille de mélange - qui, dans une installation de gestion centralisée, est un élément volumineux - n'a ici à gérer que des échanges hydrauliques minimes et peut être réalisée sous forme miniature. Il en résulte qu'une grande partie du dispositif 8 de gestion individuelle peut alors être constituée sous forme intégrée, se présentant comme un module comprenant, comme illustré à la figure 3, un bloc 15 (structure monobloc) dans lequel sont prévus :
- une cavité 16 formant bouteille de mélange miniature,
- deux conduits 17a, 17r respectivement d'amenée et de retour interposés entre une face du bloc 15 et la cavité 16, lesdits conduits 17a, 17r étant propres à être raccordés respectivement aux susdits conduits 10a, 10r pour l'alimentation de la cavité en fluide hydraulique à haute température du circuit hydraulique primaire Hp,
- deux canaux respectivement 18d de départ et 18r de retour de fluide hydraulique secondaire à basse température débouchent, à une de leurs extrémités respectives, sur une face du bloc 15, lequel canal 18d constituant le susdit conduit 9d de départ de fluide hydraulique secondaire et lequel canal 18r constituant le susdit conduit 9r de retour de fluide hydraulique secondaire,
- un canal de bipasse 19 s'étendant entre les autres extrémités respectives des susdits canaux 18d de départ et 18r de retour de fluide hydraulique secondaire,
- un canal d'interconnexion d'amenée 31a s'étendant entre la cavité 16 et la jonction 20 du canal de bipasse 19 avec le canal 18d de départ de fluide hydraulique secondaire, la jonction 20 entre le canal de départ 18d, le canal de bipasse 19 et le canal d'interconnexion d'amenée 31a formant chambre de mélange entre le fluide hydraulique secondaire de retour à travers le bipasse et à basse température et le fluide hydraulique primaire à haute température en provenance de la cavité 16 aux fins d'apport thermique compensateur, et
- un canal d'interconnexion de retour 31r s'étendant entre la jonction du canal de bipasse 19 avec le canal 18r de retour de fluide hydraulique secondaire et la cavité 16.

Pour simplifier les raccordements du bloc 15 aux conduits, il est préférable que les deux canaux 17a, 17r débouchent sur la même face 21 du bloc 15 et/ou que les deux canaux 18d, 18r respectivement de départ et de retour de fluide hydraulique secondaire débouchent sur la même face 22 du bloc 15, laquelle face 22 est différente de la face 21 précitée. La face 22 peut par exemple être la face inférieure du bloc 15 en position de montage, tandis que la face 21 est une face latérale du bloc.

On notera que la cavité 16 peut comporter en outre un canal supérieur 23, normalement obturé en fonctionnement, pour le dégazage du circuit et un canal inférieur 24, normalement obturé en fonctionnement, pour l'évacuation des dépôts (boues) dans le fond de la cavité.

Avantageusement, le bloc 15 comporte en outre un évidement 25 creusé dans une face 26 qui, de préférence, est la face supérieure du bloc 15 en position de montage. Il devient ainsi possible de monter un dispositif de pompage (micro-pompe) 27 sur le bloc 15 avec un organe de pompage 28, tel qu'une roue à palettes, engagé dans ledit évidement 25. Le canal de départ 18d est alors agencé, comme illustré à la figure 3, pour traverser l'évidement 25 avec un tronçon s'étendant entre le conduit de bipasse 19 et l'évidement 25 et un autre tronçon s'étendant entre l'évidement 25 et la face 22 du bloc 15.

L'évidement 25 et le dispositif de pompage 27 peuvent être respectivement agencés pour que le dispositif de pompage 27 puisse être fixé dans l'évidement 25 (par exemple par vissage) en obturant l'évidement 25 de façon étanche.

Le bloc 15 peut être fabriqué, dans des conditions économiques à moindre coût et en grande série, par moulage en une matière synthétique appropriée.

Le module constitué par le bloc 15 et le dispositif de pompage 27 monté sur celui-ci forme un ensemble unitaire de faible encombrement (à titre d'exemple l'ensemble peut présenter une hauteur de l'ordre de 15 cm et une épaisseur de quelques centimètres) qui peut être fixé sur un mur de façon discrète, voire être incorporé dans un mur.

Eventuellement, la zone de mélange peut, de façon classique, être équipée d'une vanne 3 voies associée à un thermostat, de manière que la température du circuit secondaire soit régularisée tout en autorisant un fonctionnement continu du dispositif de pompage 27. A cet effet, on peut avantageusement agencer le bloc 15 de façon appropriée, comme illustré à la figure 3, en prévoyant un canal 29 additionnel s'ouvrant sur le canal de départ 18d, et plus précisément à la jonction de sortie de l'évidement 25 et du canal 18d, et débouchant à son autre extrémité sur une face 30 du bloc 15. La vanne 3 voies (non montrée) peut être montée dans le canal 29 à partir de la face 30 ; à défaut de mise en oeuvre d'une telle vanne, l'orifice du canal 29 est obturé.

## Revendications

1. Procédé pour chauffer un local (1) subdivisé en plusieurs pièces (2a, 2b, 2c) à partir d'un circuit hydraulique primaire à haute température (Hp), au moins une pièce étant équipée d'au moins un circuit hydraulique secondaire à basse température (Hs) de chauffage par surface rayonnante,
**caractérisé en ce qu'**on raccorde chaque circuit hydraulique secondaire à basse température au circuit hydraulique primaire à haute température et **en ce qu'**on gère (8) individuellement le fonctionnement de chaque circuit hydraulique secondaire à basse température (Hs) avec recirculation au moins partielle du fluide hydraulique à basse température du circuit hydraulique secondaire et avec un apport compensateur de fluide hydraulique à haute température du circuit hydraulique primaire.

2. Procédé selon la revendication 1, **caractérisé en ce que**, lorsqu'une pièce (2c) est équipée de plusieurs circuits hydrauliques secondaires à basse température (Hs) de chauffage par planchers chauffants, on gère individuellement le fonctionnement de chaque circuit hydraulique secondaire équipant cette pièce.

3. Installation de chauffage par surface rayonnante pour un local (1) comportant plusieurs pièces (2a, 2b, 2c), ladite installation comportant un circuit hydraulique primaire à haute température (Hp) et, dans au moins une pièce, au moins un circuit hydraulique secondaire de chauffage à basse température (Hs) pour la surface rayonnante,
**caractérisée en ce que** chaque circuit hydraulique secondaire à basse température est connecté au circuit hydraulique primaire à haute température et **en ce qu'**un dispositif de gestion individuelle (8) est interposé entre ledit circuit hydraulique primaire à haute température (Hp) et chaque circuit hydraulique secondaire à basse température (Hs), ledit dispositif (8) étant propre à réguler, équilibrer et régler ledit circuit hydraulique secondaire (Hs) par recirculation au moins partielle du fluide hydraulique de celui-ci avec apport compensateur de fluide hydraulique à haute température du circuit hydraulique primaire.

4. Installation selon la revendication 3, **caractérisée en ce que**, lorsqu'une pièce (2c) est équipée de plusieurs circuits hydrauliques secondaires (Hs) de chauffage à basse température, à chaque circuit hydraulique secondaire (Hs) est fonctionnellement associé un dispositif de gestion individuelle (8) respectif.

5. Installation selon la revendication 3 ou 4, **caractérisée en ce que** le dispositif de gestion (8) comprend :
- une bouteille de mélange (11),
- deux conduits (10a, 10r) respectivement d'amenée et de retour de fluide hydraulique primaire à haute température raccordés entre ledit circuit hydraulique primaire (Hp) et ladite bouteille de mélange (11) pour l'alimentation de celle-ci en fluide hydraulique primaire à haute température,
- deux conduits (7d, 7r) respectivement de départ et de retour du fluide hydraulique secondaire à basse température raccordés, à une de leurs extrémités respectives, audit circuit hydraulique secondaire (Hs),
- un conduit de bipasse (12) s'étendant entre les autres extrémités respectives desdits conduits (7d, 7r) de départ et de retour de fluide hydraulique secondaire,
- un conduit d'interconnexion d'amenée (9a) s'étendant entre la bouteille de mélange (11) et la jonction (M) du conduit de bipasse (12) avec le conduit (7d) de départ de fluide hydraulique secondaire pour y amener du fluide hydraulique primaire à haute température en provenance de la bouteille de mélange (11),
- un conduit d'interconnexion de retour (9r) s'étendant entre la jonction du conduit de bipasse (12) avec le conduit de retour du fluide hydraulique secondaire et la bouteille de mélange (12) pour ramener à celle-ci du fluide hydraulique secondaire de retour, et
- des moyens (13) de circulation du fluide hydraulique secondaire disposés dans le susdit conduit (7d) de départ du fluide hydraulique secondaire.

6. Installation selon la revendication 5, **caractérisée en ce que** chaque dispositif (8) comprend en outre un capteur de température (14) disposé dans la pièce et **en ce que** les moyens (13) de circulation du fluide hydraulique secondaire sont placés sous la dépendance dudit capteur de température (14).

7. Installation selon la revendication 6, **caractérisée en ce que** chaque dispositif (8) comprend en outre des moyens de réglage de seuil de température placés sous la dépendance dudit capteur de température (14) et **en ce que** les moyens (13) de circulation du fluide hydraulique secondaire sont placés sous la dépendance desdits moyens de réglage de seuil de température.

8. Installation selon la revendication 6 ou 7, **caractérisée en ce que**, lorsqu'une pièce (2c) est équipée de plusieurs circuits hydrauliques secondaires à basse température (Hs), il est prévu un seul capteur de température (14) et tous les dispositifs de gestion individuelle (8) respectifs des circuits hydrauliques secondaires (Hs) de cette pièce (2c) sont placés sous la dépendance de cet unique capteur de température (14).

9. Installation selon la revendication 6 ou 7, **caractérisée en ce que**, lorsqu'une pièce (2c) est équipée de plusieurs circuits hydrauliques secondaires à basse température (Hs), il est prévu, dans cette pièce, plusieurs capteurs de température (14) associés fonctionnellement respectivement aux dispositifs de gestion individuelle (8) respectifs des circuits hydrauliques secondaires (Hs) de cette pièce.

10. Installation selon l'une quelconque des revendications 5 à 9, **caractérisée en ce que** le dispositif de gestion individuelle (8) est en partie agencé sous forme d'un module comprenant un bloc (15) dans lequel sont prévus :
- une cavité (16) formant bouteille de mélange miniature,
- deux conduits (17a, 17r) respectivement d'amenée et de retour interposés entre une face (21) dudit bloc (15) et la cavité (16), pour l'alimentation de la cavité en fluide hydraulique primaire à haute température,
- deux canaux (18d, 18r) respectivement de départ et de retour de fluide hydraulique secondaire à basse température débouchant, à une de leurs extrémités respectives, sur une face (22) dudit bloc (15),
- un canal de bipasse (19) s'étendant entre les autres extrémités respectives des susdits canaux de départ et de retour (18d, 18r) de fluide hydraulique secondaire,
- un canal d'interconnexion d'amenée (31a) s'étendant entre la cavité (16) et la jonction (20) du canal de bipasse (19) avec le canal (18d) de départ de fluide hydraulique secondaire, la jonction (20) entre le canal de départ (18d), le canal de bipasse (19) et le conduit d'interconnexion d'amenée (31a) formant chambre de mélange, et
- un canal d'interconnexion de retour (31r) s'étendant entre la jonction du canal de bipasse (19) avec le canal (18r) de retour de fluide hydraulique secondaire et la cavité (16).

11. Installation selon la revendication 10, **caractérisée en ce que** les deux susdits conduits (17a, 17r) débouchent sur une même face (21) du bloc (15).

12. Installation selon la revendication 10 ou 11, **caractérisée en ce que** les deux canaux de départ et de retour (18d, 18r) débouchent sur une même face (22) du bloc (15).

13. Installation selon l'une quelconque des revendications 10 à 12, **caractérisée en ce que** le bloc (15) comporte en outre un évidement (25) creusé dans une face (26) dudit bloc et traversé par le canal de départ (18d) en aval de ladite chambre de mélange (20), ce grâce à quoi un dispositif de pompage (27) peut être monté sur le module avec un organe de pompage (28) engagé dans ledit évidement (25) pour la circulation du fluide hydraulique dans le circuit secondaire (Hs).

14. Installation selon la revendication 13, **caractérisée en ce que** le dispositif de pompage (27) est fixé sur la face (26) dudit bloc (15) pourvue dudit évidement (25) et **en ce que** ladite face (26) du bloc et le dispositif de pompage (27) sont mutuellement agencés pour que le dispositif de pompage (27) obture ledit évidement (25) de façon étanche.

15. Module de gestion hydraulique pour une installation hydraulique de chauffage comportant un circuit secondaire à basse température (Hs), notamment pour une surface rayonnante, alimenté à partir d'un circuit primaire à haute température (Hp) selon l'une quelconque des revendications 10 à 14, **caractérisé en ce qu'**il comprend un bloc (15) dans lequel sont prévus :
- une cavité (16) formant bouteille de mélange miniature,
- deux conduits (17a, 17r) respectivement d'amenée et de retour interposés entre une face (21) dudit bloc (15) et la cavité (16), pour l'alimentation de la cavité (16) en fluide hydraulique primaire à haute température,
- deux canaux respectivement de départ (18d) et de retour (18r) de fluide hydraulique secondaire à basse température débouchant, à une de leurs extrémités respectives, sur une face (22) dudit bloc (15),
- un canal de bipasse (19) s'étendant entre les autres extrémités respectives desdits canaux de départ et de retour (18d, 18r) de fluide hydraulique secondaire,
- un canal d'interconnexion d'amenée (31a) s'étendant entre la cavité (16) et la jonction (20) du canal de bipasse (19) avec le canal (18d) de départ de fluide hydraulique secondaire, la jonction (20) entre le canal de départ (18d), le canal de bipasse (19) et le conduit d'interconnexion d'amenée (31a) formant chambre de mélange, et
- un canal d'interconnexion de retour (31r) s'étendant entre la jonction du canal de bipasse (19) avec le canal (18r) de retour de fluide hydraulique secondaire et la cavité (16).

16. Module selon la revendication 15, **caractérisé en ce que** les deux susdits conduits (17a, 17r) débouchent sur une même face (21) du bloc (15).

17. Module selon la revendication 15 ou 16, **caractérisé en ce que** les deux canaux de départ et de retour (18d, 18r) de fluide hydraulique secondaire débouchent sur une même face (22) du bloc (15).

18. Module selon l'une quelconque des revendications 15 à 17, **caractérisé en ce que** le bloc (15) comporte en outre un évidement (25) creusé dans une face (26) dudit bloc (15) et traversé par le canal de départ (18d) de fluide hydraulique secondaire en aval de ladite chambre de mélange (20), ce grâce à quoi un dispositif de pompage (27) peut être monté sur le module avec un organe de pompage (28) engagé dans ledit évidement (25) pour la circulation du fluide hydraulique dans le circuit secondaire (Hs).

19. Module selon la revendication 18, **caractérisé en ce que** le dispositif de pompage (27) est fixé sur la face (26) dudit bloc (15) pourvue dudit évidement (25) et **en ce que** ladite face (26) du bloc (15) et le dispositif de pompage (27) sont mutuellement agencés pour que le dispositif de pompage (27) obture ledit évidement (25) de façon étanche.
